# EUROPEAN PATENT SPECIFICATION

(11) **EP 2 297 215 B1**
(45) Date of publication and mention of the grant of the patent: **27.07.2016**
(21) Application number: 09794948.1
(22) Date of filing: 18.06.2009
(51) Int. Cl.: C08F 259/08, C08J 3/00, C09D 151/06

(54) **FLUOROPOLYMER AQUEOUS HYBRID COMPOSITIONS WITH IMPROVED FILM FORMATION**
WÄSSRIGE FLUORPOLYMER-HYBRIDZUSAMMENSETZUNGEN MIT VERBESSERTER FILMBILDUNG
COMPOSITIONS HYBRIDES AQUEUSES DE POLYMÈRE FLUORÉ AVEC UNE FORMATION DE FILM AMÉLIORÉE

(30) Priority: 07.07.2008 US 78619
(43) Date of publication of application: 23.03.2011
(73) Proprietor: Arkema Inc., King Of Prussia, PA 19406 (US)
(72) Inventor: WOOD, Kurt, A., Abington PA 19001 (US); HEDHLI, Lotfi, F-92000 Nanterre (FR); DURALI, Mehdi, West Chester PA 19380 (US)
(74) Representative: Albani, Dalila
(86) International application number: PCT/US2009/047769
(87) International publication number: WO 2010/005756

(56) References cited:
- EP-A2- 0 360 575
- US-A- 5 646 201
- US-A- 5 646 201
- US-A1- 2006 210 715
- US-A1- 2006 264 563
- US-B1- 6 680 357

## Description

### Field of the Invention

The invention relates to aqueous fluoropolymer hybrid compositions made by a seeded emulsion polymerization process, having improved film formation properties. The seed is a fluoropolymer dispersion. At least two different monomer compositions are added sequentially to the seeded dispersion. These monomer compositions preferably include acrylic monomers. The first monomer composition is selected for miscibility with the fluoropolymer dispersion. The second monomer composition is selected to have a glass transition temperature (Tg) of less than 30°C. The final composition can be formulated to make coatings with a minimum film forming temperature (MFFT) of less than 5°C, and a maximum VOC of 50 g/liter. The composition is especially useful for coatings and films.

### Background of the Invention

Fluoropolymer-based coatings and films are widely used because of their outstanding properties. For example, coatings and films based on 70-80% polyvinylidene fluoride (PVDF) resins, with the remainder being selected acrylic resins, are well known for their outstanding outdoor weatherability properties, as well as other properties such as chemical resistance and formability. Another class of fluoropolymer-based coatings, based on various fluorinated acrylic monomers, is well known for its anti-graffiti and stain resistance properties.

There is a need for fluoropolymer-based coatings and films which maintain these excellent properties, but which can be made by more environmentally-friendly methods. For instance, PVDF-based paints commonly contain high levels of organic solvents, which are used to dissolve or disperse the PVDF resin. These organic solvents are typically classified as volatile organic compounds (VOCs) and regulated in their use. Some other routes to PVDF-based coatings and films may not involve solvents, but do involve energy-intensive high temperature baking or melt-processing steps.

PVDF-based aqueous compositions are more environmentally-friendly than solvent-based systems. Such hybrid compositions (i.e., compositions containing more than one type of polymer) are shown, for example, in US 5,804,650. JP2003231722 describes three layer core-shell compositions involving the two fluorine copolymers differing in molecular weight, and a single acrylic monomer composition. US 5,349,003 and US 5,646,201 describe vinylidene fluoride/acrylic compositions. US 6,680,357 and US 2006264563 mention the possibility of using two or more different acrylic monomer compositions, for the purpose of creating different morphologies. There is no description of the nature of the phases, nor any examples of a multi-feed system.

These hybrid compositions can be characterized by a Minimum Film formation Temperature (MFFTs), which is the lowest temperature at which the dispersion will form a continuous film in its neat form. The MFFT is a physical property of both neat dispersions and formulated dispersions and can be measured on a gradient temperature instrument such as the "MFFT Bar" (Paul Gardner, Inc.). When applying a coating or a paint made with a dispersion, it is necessary that the formulated MFFT be below the temperature at which the coating or paint is dried, in order to achieve an integral dry paint film. Accordingly, it is a common practice to add coalescing solvents, also called coalescents, to coating and paint formulations, to lower the MFFT of the formulation to a temperature below that of the intended drying temperature. For field-applied paints, since the drying temperature can often not be controlled, a common practice is to formulate the paint such that the formulated MFFT is below 5°C, or even below 0°C, to ensure that low temperature film formation properties may be obtained (e.g. film formation at 40 °F which is about 4 °C). A common rule of thumb is that 1% of a good coalescent (on polymer solids) can reduce the MFFT of a dispersion about 2°C. Thus, a dispersion with a neat MFFT at 30 °C will normally require about 15% coalescent on polymer solids to achieve a formulated MFFT of about 0°C. The coalescing solvents contribute to the VOCs of the formulation. It is generally possible to add no more than 5 to 7% coalescent on polymer solids (depending on the pigment content of the formulation), without exceeding a VOC level of 50 g/(liter less water), as measured by EPA Method 24. Thus, a formulated outdoor paint or coating, made from a dispersion with a neat MFFT of 30 °C, containing about 15% coalescent on polymer solids, will typically have a VOC level which far exceeds 50 g/(liter less water).

Examples in various patents, such as JP 01072819A and JP2003231722, describe PVDF-based hybrid dispersions, with neat MFFTs in the 30-60°C range, which can be used to make high performance coatings. Likewise, some commercial products have recently become available, for example the Zeffle SE™ series of waterbased fluoropolymer emulsions by Daikin Industries, which have MFFTs in the 40-60 °C range. To achieve film formation at temperatures as low as 5°C with formulations based on these materials, high coalescent levels of 10% on polymer solids or more are required. The VOC levels for such formulations are in the100-250 g/(liter- water) range, which represents a significant improvement, in terms of environmental impact, over solvent-based coatings approaches. However, VOC levels below about 100 g/(liter - water) are difficult to attain with these materials, without sacrificing key properties such as weatherability and dirt resistance. This means they may not be useable in the future in many exterior applications, where regulations will limit VOCs to 50 g/(liter - water) or less. Consequently, new fluoropolymer hybrid dispersions are required, which can be formulated to achieve stable paints and coatings with an MFFT of 5° C or less, with a maximum VOC of 50 g/liter, without a significant loss of weatherability or dirt resistance. To achieve this target, the hybrid composition must have a neat MFFT of no more than 20°C, preferably no more than 15°C.

Some aqueous fluoropolymer hybrid compositions with MFFTs of less that 20 °C are described in examples of US 5646201. These are produced using a single acrylic composition of composition 50% methyl methacrylate, 50% ethyl acrylate, with a Tg of about 26 C. However, in practice low MFFT hybrid dispersions made in this fashion are difficult to formulate into stable paint formulations with a good balance of properties and a VOC of less than 50 g/(liter - water). Two kinds of formulation stability problems can be observed with these hybrid dispersions: If the acrylic composition contains little or no copolymerized acid monomers (typically less than about 2 wt% based on the weight of total monomer), the formulations will exhibit flocculation problems during the formulation process, or subsequently upon storage. If on the other hand the acrylic composition contains enough copolymerized acid monomers to minimize flocculation problems for the aqueous fluoropolymer dispersion after neutralization with a base to a typical aqueous coating pH of about 7-10, the MFFT of the neutralized aqueous fluoropolymer composition will increase over time, leading to a need for higher levels of coalescent as well as a loss of properties such as weatherability due to the creation of an unfavorable particle morphology. The MFFT increase phenomenon can be minimized by choosing an acrylic composition with a very low Tg, less than about 10 °C, but then other properties such as dirt resistance will be compromised.

Another environmental issue of certain fluoropolymer-based materials is that they are often made with fluorosurfactants, and may contain perfluoroalkanoate residues, or species which can chemically break down to contain perfluoroalkanoates or perfluoroalkanoic acids. Many of these perfluoroalkanoates have been found to have very long lifetimes in the environment, and to bioaccumulate.

Therefore, there is a need for a fluoropolymer-based dispersion, having an MFFT of 20° C or less, which can be formulated to make stable, high performance paints and coatings with a maximum VOC of 50 g/liter. Ideally the dispersion is fluorosurfactant-free.

Surprisingly it has been found that a fluoropolymer-seeded process, using at least two different ethylenically unsaturated monomer compositions, can be tailored to provide an aqueous fluoropolymer hybrid composition having an MFFT of 20° C or less, and preferably an MFFT of 15°C or less, which can be made into a stable, high performance coating for ambient temperature drying conditions. This is done by selecting the first monomer composition for miscibility with the fluoropolymer dispersion, and the second monomer composition to have a glass transition temperature (Tg) of less than 30°C.

The aqueous fluoropolymer hybrid composition can be formulated into coating compositions having an MFFT of less than 5°C or less with a maximum VOC of 50 g/liter.

### Summary of the Invention

The invention relates to a stable aqueous fluoropolymer hybrid composition having:
a) a fluoropolymer;
b) a first vinyl polymer that is miscible with said fluoropolymer; and
c) a second vinyl polymer having a different composition than said first vinyl polymer, and having a Tg of less than 30°C; and
d) optionally other vinyl polymers,
wherein said fluoropolymer dispersion has a minimum film forming temperature (MFFT) of less than 20°C.

The invention also relates to a process for forming an environmentally friendly fluoropolymer hybrid composition comprising the steps of:
a) forming an aqueous fluoropolymer seed dispersion, wherein the fluoropolymer particles have a particle size of less than 300 nm;
b) sequentially polymerizing at least two different vinyl monomer compositions in the presence of said fluoropolymer to form a stable fluoropolymer composition;
where the first vinyl monomer composition forms a polymer that is miscible with said fluoropolymer; and the second vinyl monomer composition forms a polymer having a Tg of less than 30°C; and wherein said fluoropolymer composition has an minimum film forming temperature (MFFT) of less than 20°C.

The invention further relates to a coating composition having as its polymer components (a) fluoropolymer; (b) a first vinyl polymer that is miscible with said fluoropolymer; (c) a second vinyl polymer having a different composition than said first vinyl polymer, and having a Tg of less than 30°C; and (d) optionally other vinyl polymers, where the coating composition has as a minimum film forming temperature (MFFT) of less than 5°C, and a VOC of less than 50 g/(liter-water).

### Detailed Description of the Invention

The invention relates to aqueous fluoropolymer compositions made by polymerizing at least two different ethylenically unsaturated monomer compositions sequentially in the presence of a fluoropolymer dispersion.

The composition of the invention is formed using a fluoropolymer seed dispersion. The term "fluoromonomer" or the expression "fluorinated monomer", as used herein, means a polymerizable alkene which contains at least one fluorine atom, fluoroalkyl group, or fluoroalkoxy group attached to the double bond of the alkene that undergoes polymerization. The term "fluoropolymer", as used herein, means a polymer formed by the polymerization of at least one fluoromonomer, and it is inclusive of homopolymers, copolymers, terpolymers and higher polymers which are thermoplastic in their nature, meaning they are capable of being formed into useful pieces by flowing upon the application of heat, such as is done in molding and extrusion processes. The thermoplastic polymers typically exhibit a crystalline melting point.

The fluoropolymers that can be used as the seed particles for this invention include vinylidene fluoride (VF₂) homopolymer (I), and copolymers of (I) and (II) an ethylenically unsaturated compounds containing fluorine (e.g. trifluorochloroethylene, tetrafluoroethylene, hexafluoropropylene, vinylfluoride, perfluoroacrylic acid), a diene compound (e.g. butadiene, isoprene, chloroprene), a non-fluorinated ethylenically unsaturated compounds (e.g. cyclohexy vinyl ether). The preferred fluoropolymer composition contains 50 to 100 parts by weight of vinylidene fluoride and preferably 70 to 100 parts; 0 to 30 parts by weight of hexafluoropropylene; and 0-30 parts by weight of any other monomer mentioned above as (II). Preferably the fluoropolymer has a crystallinity of < 30 J/g (as measured by differential scanning calorimetry, 2^{nd} heat).

One of skill in the art will understand that in addition to the specific vinylidene fluoride-hexafluoropropylene polymer latex specifically illustrated as a starting material, the invention contemplates, as equivalents, other known vinylidene fluoride copolymers, see, for example, U.S. Pat. No. 5,093,427 and PCT Application WO 98/38242 and vinylidene fluoride homopolymers, see U.S. Pat. Nos. 3,475,396 and 3,857,827, which can be substituted as seed polymers in the afore described reaction.

The invention also contemplates as suitable seed polymers vinyl fluoride polymers of the types described in PCT Applications WO 98/46657 and WO 98/46658.

The aqueous fluoropolymer dispersion can be produced by any conventional emulsion polymerization method as long as the fluoropolymer particle size remains under 300 nm., more preferably under 200 nm. The aqueous fluoropolymer dispersion can be prepared for instance by emulsion polymerization of monomers (I) or (I) and (II) in an aqueous medium, in presence of a surfactant, an initiator, a chain transfer agent, and a pH adjusting agent. The fluoropolymer dispersion is preferably synthesized using free-radical initiation. Chain transfer agents, buffering agents, antifoulants, and other additives typically used in a fluoropolymer emulsion process, may also be present.

The surfactants that can be used to prepare the aqueous fluoropolymer dispersion, or added subsequently to the dispersion during a later step of the manufacturing process, include anionic, cationic surfactant, non-ionic surfactants and amphoteric surfactants. They can be used separately or in combination of two or more. The amount of surfactant usually used is 0.05 to 5 parts by weight per 100 parts by weight of total fluoropolymer particles.

Fluorosurfactants may be used in forming the fluoropolymer, however non-fluorinated surfactants are preferred, due to environmental reasons. Useful non-fluoroinated surfactants include cationic, anionic, amphoteric surfactants, as well as reactive emulsifiers. Some useful surfactants include, but are not limited to esters of higher alcohol sulfates (e.g. sodium salts of alkyl sulfonic acids, sodium salts of alkyl benzenesulfonic acids, sodium salts of succinic acids, sodium salts of succinic acid dialkyl ester sulfonic acids, sodium salts of alkyl diphenyether disulfonic acids); alkyl pyridinium chloride, alkylammonium chloride; polyoxyethylene alkylphenyl ethers, polyoxyethylene alkyl ethers, polyoxyethylene alkyl esters, polyoxyethylene alkylphenyl estersglycerol esters, sorbitan alkylesters, and derivatives thereof; lauryl betaine; sodium styrene sulfonate, sodium alkylsulfonate, and sodium aryl alkylsulfonate; polyvinyl phosphonic acid, polyacrylic acid, polyvinyl sulfonic acid, and the salts thereof; emulsifier(s) having polyethylene glycol, polytetramethylene glycol and/or polypropylene glycol segments, including block polymers.

The aqueous fluoropolymer hybrid composition of the invention is formed by polymerizing at least two different monomer compositions sequentially in the presence of the fluoropolymer seed dispersion. Each monomer composition is composed of one or more monomers. The monomer compositions form separate homopolymers or copolymers. As used herein, the term "copolymer" is used to mean a polymer formed from two or more chemically distinct monomer species, and can include terpolymers, and polymers with more than three different monomers. When two or more monomers are present in a monomer composition, the monomer composition may be homogeneous throughout the addition of the monomer composition to the reactor, or the monomer composition may be non-homogeneous, thereby producing a gradient copolymer. A gradient copolymer may be formed in several ways, as known in the art - such as feeding one monomer to the reactor from a reservoir, and at the same time feeding a second monomer into the same reservoir - so the monomer ratio to the reactor will continually vary. A gradient polymer may also be formed through the use of a controlled radical polymerization process, such as by using RAFT or nitroxide agents to control the polymer architecture.

At least one of the monomer compositions is selected for miscibility with the fluoropolymer. At least one of the monomer compositions is selected to have a glass transition temperature of less than 30°C. The ratio of the two different monomer compositions can range from 10:90 to 90:10, preferably from 25:75 to 75:25. The monomer compositions could be made up of a single, ethylenically unsaturated monomer, but more preferably contain two or more different monomers. One of skill in the art will recognize that the monomer mixture may be adjusted to produce different (co)polymer properties, such as Tg, weatherability, tensile strength, and chemical resistance. While the monomer compositions could be all non-(meth)acrylic monomers, it is preferred that the compositions contain at least one acrylic monomer, and in one preferred embodiment, all of the monomers are acrylic monomers.

Ethylenically unsaturated (vinyl) monomers useful in the monomer compositions include includes acrylic acid alkyl ester (a) and/or methacrylic acid alkyl ester (b), a copolymerizable monomer (c) with a functional group, and a non-functional monomer (d) other than acrylic acid ester and methacrylic acid ester can be added in some cases.

Useful acrylic acid ester (a) monomers include, but are not limited to ethyl acrylate, methyl acrylate, butyl acrylate, propyl acrylate, isobutyl acrylate, amyl acrylate, 2-ethylhexyl acrylate, hexyl acrylate. Useful methacrylic acid ester (b) monomers include, but are not limited to, ethyl methacrylate, methyl methacrylate, butyl methacrylate, propyl methacrylate, isobutyl methacrylate, amyl methacrylate, 2-ethylhexyl methacrylate, hexyl meth acrylate, and trifluoroethyl methacrylate. Useful functional copolymerizable monomers (c) include, but are not limited to, α,β unsaturated carboxylic acids (e.g. acrylic acid, methacrylic acid, fumaric acid, crotonic acid, itaconic acid); vinyl phosphonic and vinyl sulfonic acids, vinyl ester compounds, amide compounds (e.g. acrylamide, methacrylamide, N-methylmethacrylamide, N-methylolmethacrylamide, N-alkylacrylamide, N-alkylacryl methamide, N-dialkyl methacrylamide, N-dialkyl acrylamide); monomer containing hydroxyl group (e.g hydroxyethyl methacrylate, hydroxyethyl acrylate, hydroxypropyl acrylate, hydroxypropyl methacrylate, diethylene glycol ethyl ether acrylate); monomer containing epoxy groups (e.g. glycidyl acrylate, glycidyl methacrylate), monomers containing silanols (e.g. γ-trimethoxysilane methacrylate, γ-triethoxysilane methacrylate); monomer containing aldehydes (e.g. acrolein), alkenyl cyanides (e.g acrylonitrile, methacrylonitrile), and other types of functional monomers such as acetoacetoxyethyl methacrylate; and useful non-functional monomers (d) includes, but are not limited to conjugated dienes (e.g. 1,3-butadiene, isoprene), fluoroalkyl acrylates, fluoroalkylmethacrylates, aromatic alkenyl compounds (e.g. styrene, α-methylstyrene, styrene halides), and divinyl hydrocarbon compounds (divinyl benzene).

The first vinyl monomer composition is chosen for miscibility with the fluoropolymer composition. By "miscible", as used herein is meant that the polymer blend shows a single glass transition by differential scanning calorimetry, at an intermediate temperature from the glass transition temperatures of the neat component polymers. Preferred first monomer compositions contain at least 50 wt%, more preferably at least 70%, of the following seven vinyl monomers: vinyl acetate, methyl acrylate, ethyl acrylate, methyl methacrylate, ethyl methacrylate, acetoacetoxyethyl methacrylate, and acrylonitrile, and no more than about 10 wt% of hydroxyl functional monomers, acid functional monomers, styrene, or alphamethyl styrene, all of which are highly incompatible with the fluoropolymer composition. When first monomer compositions outside this range are used, the composition will have decreased weatherability performance.

The second vinyl monomer composition is chosen to have a glass transition temperature (Tg) of less than 30° C. This can be accomplished by combining high Tg and low Tg monomers in suitable ratios, as is well known in the art. The resulting Tg values for copolymer compositions obtained in this manner may be calculated using the Fox equation. Particularly preferred are compositions with a Tg between about 0° and 20° C. If the Tg is lower than about 0° C, the dirt resistance properties of the material will suffer. If the Tg is higher than about 20° C, the material will not be able to form a film at low temperature, without the use of high levels of coalescent.

The second monomer composition can also be selected to create different types of particle morphology. If the second monomer composition is selected to be compatible/miscible with both the fluoropolymer seed and the first monomer composition, a relatively homogeneous interpenetrating polymer network (IPN) type morphology will be expected to form. If the second monomer composition is selected to be compatible/miscible with the fluoropolymer seed, but incompatible with the first monomer composition, a two-domain morphology is expected where the fluoropolymer is nevertheless distributed between the two domains. Examples of possible two-domain morphologies are discussed in various reviews by Prof. Donald Sundberg and co-workers and include a core-shell morphology, a "raspberry" type morphology, and an "acorn" morphology, If the second monomer composition is selected to be incompatible with the fluoropolymer seed and the first monomer composition, the final morphology will be expected to have a two-domain structure with no fluoropolymer in one of the domains. The optimum two-domain morphology will depend upon the application needs; for instance, for low VOC highly weatherable coatings, the optimum morphology is thought to be a hard core- soft shell structure where the fluoropolymer is distributed between the core and the shell domains.

In addition to the first and second monomer compositions, third, fourth or more monomer compositions may be added in a sequenced manner. One or more of the vinyl monomer compositions may also contain functional monomers capable of undergoing subsequent reactions to effect crosslinking or post-synthesis modification reactions. One or more of the monomer compositions may also contain fluorine-containing monomers such as fluoro (meth)acrylates or trifluoroethyl methacrylate for improved chemical resistance.

The total quantity of monomer mixture should be 20 to 300 parts by weight, preferably 40 to 200, most preferably 60 to 150, per 100 parts by weight of fluoropolymer. If the total monomer quantity is less than 20 parts by weight per 100 parts by weight of seed particles, many properties are compromised including good adhesion to substrates, good mechanical properties, and the ability to form films at low temperatures. When the total monomer quantity is more than 100 parts by weight per 100 parts by weight of seed particles, and especially more than 200 parts by weight, the weathering resistance of the final material are decreased, as well as some other beneficial properties such as stain resistance.

The seeded polymerizations can be carried out under the same conditions as for conventional emulsion polymerizations. A surfactant, a polymerization initiator, a chain transfer agent, a pH regulator, and eventually a solvent and a chelating agent, are added to the seed latex, and reaction is carried out under atmospheric pressure, 0.5 to 6 hours at temperatures of 20 to 150°C, preferably from 20 to 90°C. The emulsion polymerization using the fluoropolymer as a seed can be performed according to standard methods: batch polymerization wherein the totality of the monomer mixture is added in the aqueous fluoropolymer dispersion from the beginning; semi-continuous polymerization, wherein part of the monomers mixture is fed from the beginning and reacted and then the remaining monomer mixture is fed continuously or in batches; and continuous polymerization wherein the monomer mixture is fed continuously or in batches in the aqueous fluoropolymer dispersion during the reaction.

The second monomer composition is added sequentially. In a preferred embodiment, the monomer mixture that is compatible with the fluoropolymer seed is first added, and once reacted the second monomer feed is added. In the case where the second monomer feed is incompatible with the fluoropolymer seed, the monomer mixtures may be added in either order. If more than 3 different monomer compositions are to be added, the third etc. compositions are added in a sequential manner.

Any kind of initiator that produces radicals suitable for free radical polymerization in aqueous media, for temperatures from 20 to 100 °C, can be used as the polymerization initiator. The initiator may be used alone or in combination with a reducing agent (e.g. sodium hydrogenobisulfite, sodium L-ascorbate, sodium thiosulfate, sodium hydrogenosulfite). For example, persulfates, hydrogen peroxide, can be used as water-soluble initiators, and cumene hydroperoxide, diisopropyl peroxy carbonate, benzoyl peroxide, 2,2' azobis methylbutanenitrile, 2,2'-azobisisobutyronitrile, 1,1'azobiscyclohexane-1-carbonitrile, isopropylbenzenehydroperoxyde can be used as oil-soluble initiators. Prefered initiators are 2,2' azobis methylbutanenitrile and 1,1'azobiscyclohexane-1-carbonitrile. The oil-soluble initiator is preferably dissolved in the monomner mixture or in a small quantity of solvent. The amount of initiator used is generally 0.1 to 2 parts by weight per 100 parts by weight of the monomer mixture added.

There is no limitation on the type of chain transfer agents that can be used, as long as they do not slow down considerably the reaction. The chain transfer agents that can be used include for example mercaptans (e.g. dodecyl mercaptan, octylmercaptan), halogenated hydrocarbon (e.g. carbon tetrachloride, chloroform), xanthogen (e.g. dimethylxanthogen disulfide). The quantity of chain transfer agent used is usually 0 to 5 parts by weight per 100 parts by weight of the monomer mixture added.

A small quantity of solvent can be added during the reaction in order to help the seed particle swelling by the monomer (and therefore, increase the mixing at a molecular level) and improve film formation. The quantity of solvent added should be in such ranges that workability, environmental safety, production safety, fire hazard prevention, are not impaired. The solvents used include for example acetone, methylethyl ketone, N-methyl pyrrolidone, toluene, dimethylsulfoxide, or tripropylene glycol monomethyl ether.

The quantity of pH adjusting agents (e.g. sodium carbonate, potassium carbonate, sodium hydrogenocarbonate) and chelating agents (e.g. ethylene diamine tetraacetic acid, glycine, alanine) used are 0 to 2 parts by weight and 0 to 0.1 per 100 parts by weight of the monomer mixture added, respectively.

Residual acrylic monomers are treated with the application of a proper chaser compound. A number of different chemicals including monomers with high affinity toward acrylics, any compound capable of generating active radicals at the selected reaction temperature, and the combination of above compounds can be used as chaser in this invention. The potential monomers used as chaser include but not limited to styrene, and other compatible vinyl monomers. The choice radical generating chemical can be selected, for example, from: inorganic peroxide salts, including for instance sodium, potassium or ammonioum persulfate; dialkylperoxides including for instance di-t-butyl peroxide (DTBP); dialkylperoxydicarbonates, such as for instance diisopropyl-peroxydicarbonate (IPP), di-N-propyl-peroxydicarbonate (NPP), di-sec-butyl-peroxydicarbonate (DBP); t-alkylperoxybenzoates; t-alkyperoxypivalates including for instance t-butyl and t-amylperpivalate; acetylcyclohexanesulphonyl peroxide; dibenzoyl peroxide; dicumylperoxide. Redox systems including combinations of oxidants such as hydrogen peroxide, t-butyl hydroperoxide, cumene hydroperoxide, or persulfate, and reductants such as reduced metal salts, iron (II) salts being a particular example, optionally combined with activators such as sodium formaldehyde sulfoxylate, metabisulfite, or ascorbic acid.

Other pH adjusting agents, for instance aqueous ammonia, organic amines, or inorganic bases such as potassium hydroxide, may also be added after the reaction is completed, in order to bring the final pH into a range suitable for formulation and application, often a pH in the range 7-10.

The resulting fluoropolymer dispersion is a "blend" of three or more separate polymers - the fluoropolymer seed, and the polymers formed by each separate vinyl monomer composition. The fluoropolymer seed and first (miscible) vinyl polymer form an intimate blend, which may form a type of interpenetrating polymer network (IPN). The second vinyl polymer composition having a Tg of less than 30°C may be selected to be either miscible with the fluoropolymer seed, resulting in either a relatively homogeneous intimate blend or IPN of the three or more polymers; or may be selected to be immiscible with the fluoropolymer seed, resulting in a phase separation.

In one embodiment, fluoroacrylic copolymers are formed as the second polymer composition, and are incompatible with the fluoropolymer seed. Coatings containing this composition show excellent stain resistance.

The fluoropolymer hybrid composition may be purified and isolated by means known in the art, such as by spray drying, drum drying, freeze drying.

An important property of the aqueous fluoropolymer hybrid composition, as well as compositions formulated from it, is that they exhibit excellent stability. The desired stability properties include both a colloidal stability of the dispersion (including resistance to coagulation during shear), and also the stability of the physical properties over time, for example a very low change in MFFT over time.

The fluoropolymer hybrid composition of the invention can be formulated as solvent dispersions, solvent solutions, aqueous dispersions, or as powder coatings. The resultant fluoropolymer aqueous hybrid composition is an environmentally friendly, film forming composition, with the film or coating formed having good physical properties and low VOC. The fluoropolymer hybrid composition of the invention is useful as components of field-applied and factory applied coatings and paints, caulks, sealants and adhesives, inks and varnishes, sealants, modifying resins for cements and mortars, consolidating agents, and stains.

Useful outdoor coating compositions containing the fluoropolymer hybrid composition of the invention can be formulated into coating compositions having an MFFT of less than 5°C or less with a maximum VOC of 50 g/liter. The coating compositions may contain additives typical for use in a coating, including but not limited to, pH adjustment agents, UV stabilizers, colorants, dyes, filler, water-soluble resins, rheology control additives and thickeners, and pigments and pigment extenders.

One of skill in the art could also imagine that when functional monomers are included in one or more component compositions of the invention, useful coating compositions containing the fluoropolymer hybrid composition of the invention could be obtained by adding a complementary external crosslinker in the formulation. Examples of such complementary crosslinking chemistries are described, for example, in US 6680357, incorporated herein by reference.

Based on the information provided, and the Examples, one of skill in the art could imagine many other uses for the composition of the invention.

### Examples

### Example 1 (comparative example - single vinyl monomer composition)

Fluoropolymer latex (resin composition is of 75/25 wt % VF2 / 25 HFP, latex is of 36.7 weight percent solids, 450 g), VAZO® -67 (Dupont), POLYSTEP B7 ammonium lauryl sulfate (Stepan, 30 wt % aqueous solution) are used as is. Methyl methacrylate, butyl acrylate, methacrylic acid, and ethyl acrylate were from Aldrich and used as received.

In a separate vessel, a monomer pre-emulsion is prepared from methyl methacrylate (59 g), ethyl acrylate (98.0 g) methacrylic acid (3.3 g), NORSOCRYL104 (3.3), ammonium lauryl sulfate (10 g), and water (40 g). An initiator solution is prepared from 1.0 g VAZO - 67 (DuPont) and tripropylene glycol monomethyl ether (4.0 g). The calculated Tg of the polymer of the monomer pre-emulsion, based on the Fox equation, is 16° C.

The Fluoropolymer latex is charged into a kettle equipped with a condenser, high purity argon and monomer inlets and a mechanical stirrer. After the reactor and its initial contents were flushed and purged for 10 minutes, an initial charge of monomer pre-emulsion (43.0 g) and the initiator solution are introduced into the reactor. The mixture is then stirred for 40 minutes under argon at ambient pressure and temperature. The reactor and its contents were heated to 75° C. After 30 minutes, the remaining monomer pre-emulsion was fed at a rate of 180 g / hour. When all monomer mixture had been added, residual monomer was consumed by maintaining the reaction temperature at 75° C for an additional 30 minutes. Then 2 g of a 1 % potassium persulfate aqueous solution are added to the reactor to chase the residual monomers. The reaction is then maintained at 75° C for an additional 30 minutes. The reaction mixture is then cooled to ambient temperature, vented and the latex produced by the reaction filtered through a cheese cloth. The final solids content of the latex was measured by gravimetric method and was of 48.5 weight percent.

### Example 2 (invention)

Fluoropolymer latex (resin composition is of 75/25 wt % VF2 / 25 HFP, latex is of 40 weight percent solids, 1200 g), VAZO® -67 (Dupont), POLYSTEP B7 ammonium lauryl sulfate (Stepan, 30 wt % aqueous solution) are used as received. NORSOCRYL104 from Arkema is a 50 % solution in methyl methacrylate, and was used as received. Methyl methacrylate, butyl acrylate, methacrylic acid, and ethyl acrylate were from Aldrich and used as received.

In a separate vessel, a monomer pre-emulsion - called pre-emulsion A - is prepared from methyl methacrylate (96 g), butyl acrylate (38.5 g), ethyl acrylate (24.0 g), ammonium lauryl sulfate (7 g), and water (39 g).

In another separate vessel, a monomer pre-emulsion - called pre-emulsion B - is prepared from methyl methacrylate (137 g), butyl acrylate (72 g), ethyl acrylate (86.5 g), methacrylic acid (12 g), NORSOCRYL 104 (7 g), ammonium lauryl sulfate (13 g), and water (78 g). The calculated Tg of the polymer of pre-emulsion B is 16° C.

An initiator solution is prepared from 3.0 g VAZO - 67 (DuPont) and tripropylene glycol monomethyl ether (15.0 g).

The Fluoropolymer latex is charged into a kettle equipped with a condenser, high purity argon and monomer inlets and a mechanical stirrer. After the reactor and its initial contents were flushed and purged for 10 minutes, pre-emulsion A is introduced into the reactor at a rate of 400 g / hour. Then the initiator solution is added. The mixture is then stirred for 40 minutes under argon at ambient pressure and temperature. The reactor and its contents were heated to 75° C. After 30 minutes, the pre-emulsion B was fed at a rate of 300 g / hour. When all monomer mixture had been added, residual monomer was consumed by maintaining the reaction temperature at 75 C for an additional 30 minutes. Then 5 g of a 1 % potassium persulfate aqueous solution are added to the reactor to chase the residual monomers. The reaction is then maintained at 75° C for an additional 30 minutes. The reaction mixture is then cooled to ambient temperature, vented and the latex produced by the reaction filtered through a cheese cloth. The final solids content of the latex was measured by gravimetric method and was of 52.5 weight percent.

### Example 3 (of the invention)

Fluoropolymer latex (resin composition is of 75/25 wt % VF2 / 25 HFP, latex is of 43.5 weight percent solids, 1100 g), VAZO® -67 (Dupont), POLYSTEP B7 ammonium lauryl sulfate (Stepan, 30 wt % aqueous solution) are used as received. NORSOCRYL104 from Arkema is a 50 % solution in methyl methacrylate, and was used as received. Methyl methacrylate, butyl acrylate, methacrylic acid, and ethyl acrylate were from Aldrich and used as received.

In a separate vessel, a monomer pre-emulsion - called pre-emulsion A - is prepared from methyl methacrylate (80 g), butyl acrylate ( 35 g), ethyl acrylate (47 g), ammonium lauryl sulfate (5 g), and water (39 g).

In another separate vessel, a monomer pre-emulsion - called pre-emulsion B - is prepared from methyl methacrylate (137 g), butyl acrylate (72 g), ethyl acrylate (86.5 g), methacrylic acid (12 g), NORSOCRYL 104 (7 g), ammonium lauryl sulfate (13 g), and water (78 g). The calculated Tg of the polymer of pre-emulsion B is 19° C.

An initiator solution is prepared from 3.5 g VAZO - 67 (DuPont) and tripropylene glycol monomethyl ether (15.0 g).

The Fluoropolymer latex is charged into a kettle equipped with a condenser, high purity argon and monomer inlets and a mechanical stirrer. After the reactor and its initial contents were flushed and purged for 10 minutes, pre-emulsion A is introduced into the reactor at a rate of 400 g / hour. Then the initiator solution is added. The mixture is then stirred for 40 minutes under argon at ambient pressure and temperature. The reactor and its contents were heated to 75° C. After 30 minutes, the pre-emulsion B was fed at a rate of 300 g / hour. When all monomer mixture had been added, residual monomer was consumed by maintaining the reaction temperature at 75° C for an additional 30 minutes. Then 5 g of a 1 % potassium persulfate aqueous solution are added to the reactor to chase the residual monomers further. The reaction is then maintained at 75° C for an additional 30 minutes. The reaction mixture is then cooled to ambient temperature, vented and the latex produced by the reaction filtered through a cheese cloth. The final solids content of the latex was measured by gravimetric method and was of 52.0 weight percent.

### Example 4 (comparative -two vinyl monomers, but second monomer Tg >30°C )

A fluoropolymer latex (resin composition is of 75/25 wt % VF2 / 25 HFP, latex is of 36.7 weight percent solids, 1100 g), VAZO® -67 (Dupont), and POLYSTEP B7 ammonium lauryl sulfate (Stepan, 30 wt % aqueous solution) are used as received. NORSOCRYL 104 from Arkema is a 50 % solution in methyl methacrylate, and was used as received. Methyl methacrylate, butyl acrylate, and methacrylic acid were from Aldrich and used as received.

In a separate vessel, a monomer pre-emulsion - called pre-emulsion A - is prepared from methyl methacrylate (100 g), butyl acrylate (32 g), ammonium lauryl sulfate (6 g), and water (30 g).

In another separate vessel, a monomer pre-emulsion- called pre-emulsion B - is prepared from methyl methacrylate (97 g), butyl acrylate (31 g), methacrylic acid (3.0 g), NORSOCRYL 104 (3.0 g), ammonium lauryl sulfate (5.0 g), and water (33 g). The calculated Tg of the polymer of pre-emulsion B is 51° C.

An initiator solution is prepared from 1.0 g VAZO - 67 (DuPont) and tripropylene glycol monomethyl ether (4.0 g).

The Fluoropolymer latex is charged into a kettle equipped with a condenser, high purity argon and monomer inlets and a mechanical stirrer. After the reactor and its initial contents were flushed and purged for 10 minutes, 33 g of pre-emulsion A is introduced into the reactor. Then the initiator solution is added. The mixture is then stirred for 40 minutes under argon at ambient pressure and temperature. The reactor and its contents were heated to 75° C. After 30 minutes, the pre-emulsion B was fed at a rate of 180 g / hour. When all monomer mixture had been added, residual monomer was consumed by maintaining the reaction temperature at 75° C for an additional 30 minutes. Then 2 g of a 1 % potassium persulfate aqueous solution are added to the reactor to chase the residual monomers further. The reaction is then maintained at 75° C for an additional 30 minutes. The reaction mixture is then cooled to ambient temperature, vented and the latex produced by the reaction filtered through a cheese cloth. The final solids content of the latex was measured by gravimetric method and was of 47.0 weight percent.

### MFFT data and property data for examples 1-4

The latex samples of Examples 1-4 were neutralized with 28% aqueous ammonia, or an organic amine (AMP-95 from Angus Chemical Company, or Vantex® T from Traminco), to a pH of between 8 and 9. These neutralized samples were then measured for MFFT and used for paint formulation. The MFFT was measured by applying a thin film of latex to the surface of an MFFT Bar (Paul Gardner Inc.) using a 50 micron gap draw down applicator cube, letting the coating dry for one hour, and then noting the minimum temperature at which the latex forms a transparent, crack-free film.

Additionally, a carbon black staining test (delta E color change) was run as follows: White coating formulations were prepared using the following simple formulation, which has a calculated VOC as measured by Method 24 of 23 g/(liter less water):

| Neutralized latex sample | 100 g approx (50.0 g solid resin) |
|---|---|
| Ethylene glycol butyl ether coalescent (counts as VOC) | 1.0 g |
| VOC-free aqueous white pigment grind based on TIPURE R-960 (DuPont Pigments), 56.3 wt% pigment | 23.3 g |

The formulations were applied to a metal substrate using a draw down applicator, and allowed to dry under conditions appropriate for the type of coating being considered. e.g. 4 days or one week at ambient humidity and temperature for an air-dried coating. At the end of the prescribed drying period, carbon black powder (lamp black grade, e.g. Columbia #22) is dabbed onto a test region of the coating with moderate force, repeating the process three times, until the test area is uniformly gray or black. (Alternatively, an aqueous slurry based on brown or black iron oxide pigment powder may be used in place of the carbon black powder). The coating is allowed to stand for 90 minutes, then the coating is scrubbed with wet paper towels under running tap water, with moderate pressure, to try to remove as much of the staining agent as possible. The dirt pickup resistance is then measured using a colorimeter, as the difference in color delta E* before and after the test. (as measured according to 1976 CIE L*a*b*) Coatings with a staining delta E* of less than 5 after a four day dry time can be considered excellent in terms of dirt resistance, 5-10 = very good, 10-15 = good, 15-30 = medium, and > 30 poor.

**TABLE 1**

| Example # | Initial neutralized hybrid MFFT, °C | Neutralized hybrid MFFT, °C, after six month shelf aging | Carbon black staining delta E* (4 day air dry except where indicated), initial formulation at 23 g/(liter less water VOC | Estimated formulated VOC, Method 24 (grams/(liter less water), for formulation based on shelf aged latex, with formulated MFFT = 4 C |
|---|---|---|---|---|
| 1 (comparative) | 9 | 17 | 2.6 | 78 |
| 2 | 11.5 | 12 | 0.6 (7 day air dry) | 48 |
| 3 | 9 | 11 | 1.08 (7 day air dry) | 42 |
| 4 (comparative) | 30 | 32 | could not form coating to test at this voc level VOC level | >150 |

### Examples 5- 8

The following procedure covers the general method used to prepare Examples 5-8 with the following vinylic monomer compositions for monomer mixture A and monomer mixture B (Table 2).

Fluoropolymer latex (resin composition is of 75/25 wt % VF2 / 25 HFP, latex is of 41.0 weight percent solids, 1170 g), VAZO -67 (Dupont) , POLYSTEP B7 ammonium lauryl sulfate (Stepan, 30 wt % aqueous solution) are used as received. The latex had a volume average particle size of 132 nm.

NORSOCRYL104 from Arkema is a 50 % solution in methyl methacrylate, and was used as received. Trifluoroethyl methacrylate is also an Arkema product and was used as received. Methyl methacrylate, butyl acrylate, methacrylic acid, ethyl acrylate, methyl acrylate, isooctyl mercaptopropionate (IOMP) and acrylonitrile were from Aldrich and used as received.

In a separate vessel, a monomer mixture - called monomer mixture A - is prepared from methyl methacrylate, butyl acrylate, ethyl acrylate, possibly a fourth monomer and IOMP (see Table 2 for details).

In another separate vessel, a monomer mixture - called monomer mixture B - is prepared from methyl methacrylate, butyl acrylate, ethyl acrylate, methacrylic acid, NORSOCRYL 104 (7 g), possibly a sixth monomer and IOMP (see Table 2 for details). An initiator solution is prepared from 3.0 g VAZO - 67 (DuPont) and tripropylene glycol monomethyl ether (15.0 g).

The Fluoropolymer latex is charged into a kettle equipped with a condenser, high purity argon and monomer inlets and a mechanical stirrer. After the reactor and its initial contents were flushed and purged for 10 minutes, monomer mixture A is introduced into the reactor at a rate of 600 g / hour. Then the initiator solution is added. The mixture is then stirred for 30 minutes under argon at ambient pressure and temperature. The reactor and its contents were heated to 75° C. After 30 minutes, the monomer mixture B was fed at a rate of 300 g / hour. When all monomer mixture had been added, residual monomer was consumed by raising reaction temperature to 81 C and holding reactor at this temperature for an additional 15 minutes. Then a combination of 4.3 g styrene monomer and 6.8 g of a redox initiator package (t-butyl hydroperoxide and sodium formaldehyde sulfoxilate) was added to chase the residual monomers further. The reaction is then maintained at 81° C for an additional 30 minutes. The reaction mixture is then cooled to ambient temperature, vented and the latex produced by the reaction filtered through cheesecloth. The final solids content of the latex was measured by gravimetric method and reported in Table 2.

**TABLE 2.**

| | Example 5 | Example 6 | Example 7 | Example 8 |
|---|---|---|---|---|
| **Monomer mixture A:** | | | | |
| Methyl methacrylate | 44 g | 27.3 g | 52.4 g | 25 g |
| Butyl acrylate | 23 g | 11.5 g | 24 g | 24 g |
| Ethyl acrylate | 37.7 g | 11.5 g | 29 g | 34.6 g |
| Methyl acrylate | | 52.4 g | | |
| Acrylonitrile | | | | 21 g |
| Iso-octyl mercaptopropionate (IOMP) | 0.17 | 0.17 | 0.17 | 0.17 |

| **Monomer mixture B:** | | | | |
|---|---|---|---|---|
| Methyl methacrylate | 133.8 g | 89.2 g | 74.3 | 81.8 g |
| Butyl acrylate | 85.5 g | 40.9 g | 85.5 g | 85.5 g |
| Ethyl acrylate | 133.8 g | 40.9 g | 122.6 g | 115.2 g |
| Methyl acrylate | | 185.8 g | | |
| Acrylonitrile | | | | 74.3 g |
| Trifluoroethyl methacrylate | | | 74.3 g | |
| Methacrylic acid | 14.8 g | 14.8 g | 14.8 g | 14.8 g |
| Norsocry1104 | 3.7 g | 3.7 g | 3.7 g | 3.7 g |
| ISO-octyl mercaptopropionate (IOMP) | 0.60 | 0.60 | 0.60 | 0.60 |
| Measured solid content | 51.1% | 50.3% | 50.2% | 49.8% |
| Calculated Tg, polymer of monomer mixture B, °C | 9.3 | 18.1 | 8.0 | 15.3 |

The latex samples of these examples were neutralized as with Examples 1-4, and then the MFFT was measured as before, and formulations were made up according to the following recipe, and measured for dirt resistance using a brown iron oxide aqueous slurry. For the dirt resistance test, two white commercial paint samples were also tested as comparative examples.

| | |
|---|---|
| Neutralized latex sample | 100 g |
| Byk® 346 (Altana) wetting agent | 0.2 g |
| Rhoplex® RM-8W (Rohm and Haas Company) | 1.4 g |
| Dipropylene glycol n butyl ether coalescent (counts as VOC) | 0-3.5 g (as needed to reduce formulated MFFT to < 2 C) |
| VOC-free aqueous white pigment grind based on TiPure® R-960 (DuPont Pigments), 76 wt% pigment | 25 g |

**TABLE 3**

| Example # | MFFT, C | Iron oxide slurry staining delta E* (7 day air dry) | Calculated formulated VOC, Method 24 (grams/(liter less water) |
|---|---|---|---|
| 5 | 11 | 3.39 | 42 |
| 6 | 4 | 1.07 | 0 |
| 7 | 7.5 | 6.04 | 24 |
| 8 | 10 | 3.77 | 36 |
| Duration® Paint (Sherwin Williams, Inc.) | | 13.9 | |
| Duramax® Paint (Valspar, Inc.) | | 20.9 | |

### Examples 9-16

Examples 9-16 were prepared according to the general method of Example 2, with the following vinylic monomer compositions for Pre-Emulsion A and Pre-Emulsion B. All quantities are in grams.

**TABLE 4**

| | Example 9 | Example 10 | Example 11 | Example 12 | Example 13 | Example 14 | Example 15 | Example 16 |
|---|---|---|---|---|---|---|---|---|
| Pre-emulsion A: | | | | | | | | |
| Methyl methacrylate | 120 | 160 | 60 | 180 | 120 | 120 | 160 | 120 |
| Hydroxyethyl methacrylate | 0 | 0 | 10 | 30 | | 0 | 0 | 0 |
| Ethyl acrylate | 0 | 80 | 30 | 90 | 72 | 72 | 80 | 120 |
| Methyl acrylate | 120 | 0 | | | | | | |
| Butyl acrylate | | | | | 24 | 24 | | |
| Acetoacetoxyethyl methacrylate | | | | | 24 | 24 | | |
| n-dodecyl mercaptan | 0.46 | 0.46 | 0.015 | 0.2 | | 0.46 | 0.46 | 0.46 |

| Pre-emulsion B: | | | | | | | | |
|---|---|---|---|---|---|---|---|---|
| Methyl methacrylate | 12 | 19 | 16.8 | 41 | 79.2 | 62.4 | 14.4 | 14.4 |
| Butyl acrylate | 0 | 0 | 0 | 41 | 48 | 48 | 0 | 0 |
| Ethyl acrylate | 0 | 216 | 52.5 | 557.6 | 96 | 48 | 168 | 144 |
| Methyl acrylate | 223 | 0 | | | | 0 | | |
| Hydroxyethyl methacrylate | | | 31.5 | 164 | | | | 36 |
| Acetoacetoxyethyl methacrylate | | | | | | 72 | | |
| 2-ethylhexyl acrylate | | | | | | | 48 | |
| Trifluoroethyl methacrylate | | | | | | | 0 | 36 |
| Methacrylic acid | 5 | 5 | 4.2 | 16.4 | 16.8 | 9.6 | 9.6 | 9.6 |
| n-dodecyl mercaptan | 0.46 | 0.62 | 0.33 | 1.1 | | 0.46 | | 0.46 |
| Calculated Tg, polymer of preemulsion B, °C | 16 | -14 | 20 | -5 | 9 | 16 | -25 | 11 |

## Claims

1. A stable aqueous fluoropolymer hybrid composition comprising particles, each particle being composed of:
a) a fluoropolymer seed;
b) a first vinyl polymer that is miscible with said fluoropolymer; and
c) a second vinyl polymer having a different composition than said first vinyl polymer, and having a Tg of less than 30°C; and
d) optionally other vinyl polymers,
wherein:
- said fluoropolymer composition has an minimum film forming temperature (MFFT) of less than 20°C,
- the morphology of the hybrid polymer particles is such that the fluoropolymer seed and first vinyl polymer form an intimate blend, and the second vinyl polymer forms either an intimate blend with both the fluoropolymer seed and the first vinyl polymer, or a separate phase within said hybrid particle when the second vinyl polymer is immiscible with either 1) the first vinyl polymer, resulting in a two-domain morphology wherein the fluoropolymer is distributed between the two domains, or 2) the first vinyl polymer and the fluoropolymer, resulting in a two-domain structure with no fluoropolymer in one of the domains,
and
- said first vinyl polymers comprises at least 70 weight percent of monomers selected from the group consisting of vinyl acetate, methyl acrylate, ethyl acrylate, methyl methacrylate, ethyl methacrylate, acetoacetoxyethyl methacrylate, and acrylonitrile, and less than 10 wt% of hydroxyl functional monomers, acid functional monomers, styrene, or alphamethyl styrene.

2. The stable aqueous fluoropolymer hybrid composition of claim 1, wherein at least one of said first and second vinyl polymers comprise an acrylic (co)polymer.

3. The stable aqueous fluoropolymer hybrid composition of claim 1, wherein both of said first and second vinyl polymers comprise an acrylic (co)polymer.

4. The stable aqueous fluoropolymer hybrid composition of claim 1, wherein said first and second vinyl polymers consist of an acrylic (co)polymer.

5. The stable aqueous fluoropolymer hybrid composition of claim 1, wherein said fluoropolymer comprises 50 to 100 parts by weight, preferably 70 to 100 parts by weight of vinylidene fluoride units, 0 to 30 parts by weight of hexafluoropropylene units, and 0 - 30 parts by weight of vinyl monomer units copolymerizable with vinylidene fluoride.

6. The stable aqueous fluoropolymer hybrid composition of claim 1, wherein said fluoropolymer has a crystallinity of less than 30 J/g.

7. The stable aqueous fluoropolymer hybrid composition of claim 1, wherein said first and second vinyl polymers are present in the composition at a ratio of between 10:90 to 90:10, preferably between 25:75 to 75:25.

8. The stable aqueous fluoropolymer hybrid composition of claim 1, wherein said second vinyl polymer has a Tg of from -50 °C to 20°C, preferably from 0 °C to 20°C.

9. The stable aqueous fluoropolymer hybrid composition of claim 1, wherein at least one of the vinyl polymers is a gradient copolymer.

10. A process for forming an environmentally friendly fluoropolymer hybrid composition comprising the steps of:
a) forming an aqueous fluoropolymer seed dispersion, wherein the fluoropolymer particles have a particle size of less than 300 nm;
b) sequentially polymerizing at least two different vinyl monomer compositions in the presence of said fluoropolymer to form a stable fluoropolymer hybrid particle composition;
where the first vinyl monomer composition forms a polymer that is miscible with said fluoropolymer; and the second vinyl monomer composition forms a polymer having a Tg of less than 30°C, wherein the first vinyl polymer forms an intimate blend with the fluoropolymer seed, and the second vinyl polymer forms either an intimate blend with both the fluoropolymer seed and the first vinyl polymer, or a separate phase within said hybrid particle when the second vinyl polymer is immiscible with either 1) the first vinyl polymer, resulting in a two-domain morphology wherein the fluoropolymer is distributed between the two domains, or 2) the first vinyl polymer and the fluoropolymer, resulting in a two-domain structure with no fluoropolymer in one of the domains; and wherein said fluoropolymer composition has an minimum film forming temperature (MFFT) of less than 20°C.

11. A coating composition comprising the stable aqueous fluoropolymer hybrid composition of claim 1, wherein said coating composition has a minimum film forming temperature (MFFT) of less than 20°C, and a VOC of less than 50 g/(liter-water).

12. The coating composition of claim 11, further comprising UV stabilizers, pH adjustment agents, colorants, dyes, water soluble resins, rheology control additives and thickeners, and pigments and pigment extenders, and filler.

13. The coating composition of claim 11, where an external crosslinking agent is added into the final formulation.

## Patentansprüche

1. Stabile wässrige Fluorpolymerhybridzusammensetzung, die Partikel umfasst, wobei jedes Partikel zusammengesetzt ist aus:
a) einem Fluorpolymerkeim;
b) einem ersten Vinylpolymer, das mit dem Fluorpolymer mischbar ist; und
c) einem zweiten Vinylpolymer, dessen Zusammensetzung sich von der Zusammensetzung des ersten Vinylpolymers unterscheidet und das eine Tg von weniger als 30 °C aufweist; und
d) optional weitere Vinylpolymere;
wobei:
- die Fluorpolymerzusammensetzung eine minimale Filmbildungstemperatur (MFFT, Minimum Film Forming Temperature) von weniger als 20 °C aufweist,
- die Morphologie der Hybridpolymerpartikel so ist, dass der Fluorpolymerkeim und das erste Vinylpolymer ein inniges Gemisch bilden und das zweite Vinylpolymer entweder ein inniges Gemisch sowohl mit dem Fluorpolymerkeim als auch dem ersten Vinylpolymer oder eine getrennte Phase innerhalb des Hybridpartikels bildet, wenn das zweite Vinylpolymer entweder 1) nicht mit dem ersten Vinylpolymer mischbar ist, woraus sich eine Zwei-Domänen-Morphologie ergibt, wobei das Fluorpolymer zwischen den beiden Domänen verteilt ist, oder 2) nicht mit dem ersten Vinylpolymer sowie dem Fluorpolymer mischbar ist, woraus sich eine Zwei-Domänen-Struktur ergibt, bei der in einer Domäne kein Fluorpolymer vorliegt, und
- die ersten Vinylpolymere zumindest 70 Gew.-% Monomere aufweisen, die unter Vinylacetat, Methylacrylat, Ethylacrylat, Methylmethacrylat, Ethylmethacrylat, Acetoacetoxyethylmethacrylat und Acrylnitril ausgewählt sind, und weniger als 10 Gew.-% Monomere mit funktionellen Hydroxygruppen, Monomere mit funktionellen Säuregruppen, Styrol oder alpha-Methylstyrol.

2. Stabile wässrige Fluorpolymerhybridzusammensetzung nach Anspruch 1, wobei das erste und/oder das zweite Vinylpolymer ein Acryl(co)polymer umfasst.

3. Stabile wässrige Fluorpolymerhybridzusammensetzung nach Anspruch 1, wobei sowohl das erste als auch das zweite Vinylpolymer ein Acryl(co)polymer umfassen.

4. Stabile wässrige Fluorpolymerhybridzusammensetzung nach Anspruch 1, wobei das erste und das zweite Vinylpolymer aus einem Acryl(co)polymer bestehen.

5. Stabile wässrige Fluorpolymerhybridzusammensetzung nach Anspruch 1, wobei das Fluorpolymer 50 bis 100 Gewichtsteile und vorzugsweise 70 bis 100 Gewichtsteile Vinylidenfluorideinheiten und 0 bis 30 Gewichtsteile Hexafluorpropyleneinheiten und 0 bis 30 Gewichtsteile mit Vinylidenfluorid copolymerisierbare Vinylmonomereinheiten umfasst.

6. Stabile wässrige Fluorpolymerhybridzusammensetzung nach Anspruch 1, wobei das Fluorpolymer eine Kristallinität von weniger als 30 J/g aufweist.

7. Stabile wässrige Fluorpolymerhybridzusammensetzung nach Anspruch 1, wobei das erste und das zweite Vinylpolymer in der Zusammensetzung in einem Verhältnis zwischen 10 : 90 bis 90 : 10 und vorzugsweise zwischen 25 : 75 und 75 : 25 vorliegen.

8. Stabile wässrige Fluorpolymerhybridzusammensetzung nach Anspruch 1, wobei das zweite Vinylpolymer eine Tg von -50 bis 20 °C und vorzugsweise 0 bis 20 °C aufweist.

9. Stabile wässrige Fluorpolymerhybridzusammensetzung nach Anspruch 1, wobei zumindest eines der Vinylpolymere ein Gradientenpolymer ist.

10. Verfahren zur Bildung einer umweltverträglichen Fluorpolymerhybridzusammensetzung, das die folgenden Schritte umfasst:
a) Herstellen einer wässrigen Fluorpolymerkeimdispersion, wobei die Fluorpolymerpartikel eine Partikelgröße von weniger als 300 nm aufweisen;
b) sequentielles Polymerisieren von zumindest zwei unterschiedlichen Vinylmonomerzusammensetzungen in Gegenwart des Fluorpolymers zur Bildung einer stabilen Fluorpolymerhybridpartikelzusammensetzung;
wobei die erste Vinylmonomerzusammensetzung ein Polymer bildet, das mit dem Fluorpolymer mischbar ist, und die zweite Vinylmonomerzusammensetzung ein Polymer mit einer Tg von weniger als 30 °C bildet, wobei das erste Vinylpolymer ein inniges Gemisch mit dem Fluorpolymerkeim bildet und das zweite Vinylpolymer entweder ein inniges Gemisch sowohl mit dem Fluorpolymerkeim als auch dem ersten Vinylpolymer oder eine getrennte Phase innerhalb des Hybridpartikels bildet, wenn das zweite Vinylpolymer entweder 1) nicht mit dem ersten Vinylpolymer mischbar ist, woraus sich eine Zwei-Domänen-Morphologie ergibt, wobei das Fluorpolymer zwischen den beiden Domänen verteilt ist, oder 2) nicht mit dem ersten Vinylpolymer sowie dem Fluorpolymer mischbar ist, woraus sich eine Zwei-Domänen-Struktur ergibt, bei der in einer Domäne kein Fluorpolymer vorliegt, und wobei die Fluorpolymerzusammensetzung eine minimale Filmbildungstemperatur (MFFT) von weniger als 20 °C aufweist.

11. Beschichtungszusammensetzung, die die stabile wässrige Fluorpolymerhybridzusammensetzung nach Anspruch 1 aufweist, wobei die Beschichtungszusammensetzung eine minimale Filmbildungstemperatur (MFFT) von weniger als 20 °C und einen VOC von weniger als 50 g/(Liter Wasser) aufweist.

12. Beschichtungszusammensetzung nach Anspruch 11, die ferner UV-Stabilisatoren, Mittel zur Einstellung des pH-Wertes, Färbemittel, Farbstoffe, wasserlösliche Harze, rheologiesteuernde Additive und Verdickungsmittel und Pigmente und Pigmentextender und Füllstoffe enthält.

13. Beschichtungszusammensetzung nach Anspruch 11, wobei ein externes Vernetzungsmittel in die fertige Zusammensetzung gegeben wird.

## Revendications

1. Composition hybride stable aqueuse de fluoropolymère comprenant des particules, chaque particule étant composée :
a) d'un germe de fluoropolymère ;
b) d'un premier polymère de vinyle qui est miscible avec ledit fluoropolymère ; et
c) d'un deuxième polymère de vinyle ayant une composition différente par rapport audit premier polymère de vinyle, et ayant une Tg inférieure à 30°C ;
et
d) éventuellement d'autres polymères de vinyle ;
dans laquelle
- ladite composition de fluoropolymère possède une température de formation de film minimale (MFFT) inférieure à 20°C ;
- la morphologie des particules de polymère hybrides est telle que le germe de fluoropolymère et le premier polymère de vinyle forment un mélange intime, et le deuxième polymère de vinyle forme un mélange intime avec le germe de fluoropolymère ainsi qu'avec le premier polymère de vinyle, ou bien une phase séparée au sein de ladite particule hybride lorsque le deuxième polymère de vinyle est immiscible avec 1) le premier polymère de vinyle, conduisant à une morphologie à deux domaines où le fluoropolymère est distribué entre les deux domaines, ou bien 2) le premier polymère de vinyle et le fluoropolymère, conduisant à une structure à deux domaines sans fluoropolymère dans l'un des domaines ; et
- ledit premier polymère de vinyle comprend au moins 70% en poids de monomères choisis dans le groupe constitué par l'acétate de vinyle, l'acrylate de méthyle, l'acrylate d'éthyle, le méthacrylate de méthyle, le méthacrylate d'éthyle, le méthacrylate d'acétoacétoxyéthyle, et l'acrylonitrile, et moins de 10% en poids de monomères à fonction hydroxyle, de monomères à fonction acide, de styrène ou d'alphaméthylstyrène.

2. Composition hybride de fluoropolymère selon la revendication 1, dans laquelle au moins l'un parmi lesdits premier et deuxième polymères de vinyle comprend un (co)polymère acrylique.

3. Composition hybride de fluoropolymère selon la revendication 1, dans laquelle les deux parmi lesdits premier et deuxième polymères de vinyle comprennent un (co)polymère acrylique.

4. Composition hybride de fluoropolymère selon la revendication 1, dans laquelle lesdits premier et deuxième polymères de vinyle sont constitués d'un (co)polymère acrylique.

5. Composition hybride de fluoropolymère selon la revendication 1, dans laquelle ledit fluoropolymère comprend de 50 à 100 parties en poids, préférablement de 70 à 100 parties en poids, de motifs de fluorure de vinylidène, de 0 à 30 parties en poids de motifs d'hexafluoropropylène, et 0-30 parties en poids de motifs de monomères de vinyle copolymérisables avec du fluorure de vinylidène.

6. Composition hybride de fluoropolymère selon la revendication 1, dans laquelle ledit fluoropolymère possède une cristallinité inférieure à 30 J/g.

7. Composition hybride de fluoropolymère selon la revendication 1, dans laquelle lesdits premier et deuxième polymères de vinyle sont présents dans la composition selon un rapport allant de 10:90 à 90:10, préférablement allant de 25:75 à 75:25.

8. Composition hybride de fluoropolymère selon la revendication 1, dans laquelle ledit deuxième polymère de vinyle possède une Tg allant de -50°C à 20°C, préférablement de 0°C à 20°C.

9. Composition hybride de fluoropolymère selon la revendication 1, dans laquelle au moins l'un parmi les polymères de vinyle est un copolymère à gradient.

10. Procédé de formation d'une composition hybride de fluoropolymère écologique, comprenant les étapes
a) de formation d'une dispersion de germes de fluoropolymère aqueuse, où les particules de fluoropolymère ont une taille de particules inférieure à 300 nm ;
b) de polymérisation séquentielle d'au moins deux compositions de monomères de vinyle différentes en présence dudit fluoropolymère afin de former une composition de particules hybrides de fluoropolymère stable ; dans lequel la première composition de monomères de vinyle forme un polymère qui est miscible avec ledit fluoropolymère ; et la deuxième composition de monomères de vinyle forme un polymère ayant une Tg inférieure à 30°C, où le premier polymère de vinyle forme un mélange intime avec le germe de fluoropolymère, et le deuxième polymère de vinyle forme un mélange intime avec le germe de fluoropolymère ainsi qu'avec le premier polymère de vinyle, ou bien une phase séparée au sein de ladite particule hybride lorsque le deuxième polymère de vinyle est immiscible avec 1) le premier polymère de vinyle, conduisant à une morphologie à deux domaines où le fluoropolymère est distribué entre les deux domaines, ou bien 2) le premier polymère de vinyle et le fluoropolymère, conduisant à une structure à deux domaines sans fluoropolymère dans l'un des domaines ; et où ladite composition de fluoropolymère possède une température de formation de film minimale (MFFT) inférieure à 20°C.

11. Composition de revêtement comprenant la composition hybride de fluoropolymère selon la revendication 1, dans laquelle ladite composition de revêtement possède une température de formation de film minimale (MFFT) inférieure à 20°C, et une teneur en COV inférieure à 50g/(litre-eau).

12. Composition de revêtement selon la revendication 11, comprenant en outre des agents anti-UV, des agents d'ajustement du pH, des colorants, des teintures, des résines hydrosolubles, des additifs de contrôle rhéologique et des épaississants, et des pigments et des pigments de charge, et des charges.

13. Composition de revêtement selon la revendication 11, dans laquelle un agent de réticulation externe est ajouté dans la formulation finale.
